**Europäisches Patentamt**

**European Patent Office**

**Office européen des brevets**

(19)

(11) Veröffentlichungsnummer : **0 410 073 B1**

# (12) EUROPÄISCHE PATENTSCHRIFT

(45) Veröffentlichungstag der Patentschrift :
**30.12.92 Patentblatt 92/53**

(51) Int. Cl.$^5$ : **A01G 1/04, A23N 15/04**

(21) Anmeldenummer : **90102527.0**

(22) Anmeldetag : **09.02.90**

(54) **Vorrichtung zum Transportieren von Pilzen in Pilzzuchtbetrieben.**

(30) Priorität : **27.07.89 DE 3924870**

(43) Veröffentlichungstag der Anmeldung :
**30.01.91 Patentblatt 91/05**

(45) Bekanntmachung des Hinweises auf die
Patenterteilung :
**30.12.92 Patentblatt 92/53**

(84) Benannte Vertragsstaaten :
**AT BE CH DE DK ES FR GB GR IT LI NL SE**

(56) Entgegenhaltungen :
**EP-A- 0 292 075**
**DE-C- 3 910 230**

(56) Entgegenhaltungen :
**FR-A- 2 384 462**
**FR-A- 2 419 033**
**US-A- 3 832 802**
**US-A- 4 846 337**

(73) Patentinhaber : **Kühlmann, Josef**
**Königstrasse 51**
**W-4419 Laer (DE)**

(72) Erfinder : **Kühlmann, Josef**
**Königstrasse 51**
**W-4419 Laer (DE)**

(74) Vertreter : **Habbel, Hans-Georg, Dipl.-Ing.**
**Postfach 3429 Am Kanonengraben 11**
**W-4400 Münster (DE)**

**Beschreibung**

Die Erfindung bezieht sich auf eine Vorrichtung zum Transportieren von Pilzen in Pilzzuchtbetrieben.

Aus der nicht vorveröffentlichten DE-39 10 230 C1 (angemeldet am 30.03.1989, veröffentlicht am 18.01.1990) ist eine Vorrichtung zum Sammeln, Transportieren und Abgeben von Pilzen bekanntgeworden, bei welcher eine Fördervorrichtung vorgesehen wird, die als Vertikalförderteil ausgebildet ist. Ein Trum dieses Vertikalförderteiles wird aus dem Vertikalteil ausgelenkt und zu einem Horizontalförderteil umfunktioniert, wobei die eigentliche Fördervorrichtung frei schwenkbare Sammelbehälter trägt, die stets mit ihrer offenen Seite nach oben gerichtet sind, unabhängig in welcher Richtung sie umlaufen, d. h. ob horizontal oder vertikal. Hierdurch wird erreicht, daß unabhängig von der Höhenlage des Horizontalförderers das Abgeben der Pilze an einem örtlich fixierten, feststehenden Punkt erfolgen kann, so daß hier Maßnahmen getroffen werden können, um ein beschädigungsloses Übergeben der Pilze vom Horizontalförderer zu den weiterverarbeitenden Stellen zu ermöglichen.

Der Erfindung liegt die Aufgabe zugrunde, bei einer Vorrichtung zum Transportieren von Pilzen in Pilzzuchtbetrieben Maßnahmen vorzusehen, um automatisch während des Transportes des Pilzes ein Abschneiden des Fußes des geernteten Pilzes zu erreichen.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, plattenförmige Aufnahmebehälter an einer umlaufenden Förderkette anzuordnen, wobei diese plattenförmigen Aufnahmebehälter eine Öffnung aufweisen, in die der Pilz eingesetzt werden kann. Diese Öffnung erweitert sich trichterförmig nach oben oder verjüngt sich trichterförmig nach unten, so daß in Abhängigkeit der Größe des Pilzkopfes der Pilzfuß mehr oder weniger weit durch die Öffnung nach unten zur Unterseite der plattenförmigen Aufnahmebehälter vorsteht. In den Weg der Förderkette und der daran angeordneten plattenförmigen Aufnahmebehälter ist ein Schneidmesser derart angeordnet, daß es bei der Förderbewegung des Aufnahmebehälters den über die Unterseite des plattenförmigen Aufnahmebehälters vorstehenden Pilzfuß abschneidet.

Durch die erfindungsgemäße Einrichtung wird also erreicht, daß in der jeweiligen Höhe der in unterschiedlichen Höhen übereinander angeordneten Zuchtbeete ständig vorbeibewegte plattenförmige Aufnahmebehälter vorhanden sind, in die die Ernteperson den ergriffenen und abgeernteten Pilz einsetzt.

Diese plattenförmigen Aufnahmebehälter werden nun mit der Förderkette zu einer Sammelstelle geführt, wobei auf dem Weg zu dieser Sammelstelle die Schneidestation vorgesehen ist, in der das Abschneiden des Pilzfußes bei der Bewegung der Förderkette automatisch erfolgt.

Um sicherzustellen, daß die plattenförmigen Aufnahmebehälter stets eine horizontale Lage aufweisen, also der Pilz nicht aus diesen plattenförmigen Aufnahmebehältern herausfallen kann, gleichzeitig aber die plattenförmigen Aufnahmebehälter auch die erforderliche Stabilität besitzen, um den Widerstand zu überwinden, der beim Anfahren des Schneidmessers auftritt, sind die plattenförmigen Aufnahmebehälter gemäß einer ersten Ausführungsform der Erfindung mittels Tragzapfen an der Förderkette angeordnet, wobei die Tragzapfen in eine Öffnung im plattenförmigen Behälter greifen und hier nur schwer drehend den plattenförmigen Aufnahmebehälter halten. Um die stets horizontale Lage sicherzustellen, sind im Bereich der Umlenkrollen für die Förderkette Anschlagmittel oder Führungsmittel vorgesehen, die auf die plattenförmigen Aufnahmebehälter einwirken und die stets horizontale Lage dieser Aufnahmebehälter garantieren.

Gemäß einer anderen Ausführungsform der Erfindung wird die horizontale Lage der plattenförmigen Aufnahmebehälter durch eine Gleitführung sichergestellt, in der das der Förderkette abgewandte Ende des plattenförmigen Aufnahmebehälters horizontal geführt wird. Diese Anordnung hat den Vorteil, daß die plattenförmigen Aufnahmebehälter an der Förderkette frei schwenkbar anschließen und dadurch die Umlenkeinrichtungen im Bereich der Umlenkung der Förderkette aus der horizontalen in die vertikale Lage nicht erforderlich sind (s. vergleichbar hierzu US-PS 48 46 337 bzw. DE-PS 35 25 460).

Ausführungsbeispiele der Erfindung werden nachfolgend anhand der Zeichnungen erläutert. Die Zeichnungen zeigen dabei in den

Fig. 1 bis 4 einen plattenförmigen Aufnahmebehälter in Draufsicht, in Unteransicht, im Schnitt gemäß der Linie A - A und im Schnitt gemäß der Linie B - B, in

Fig. 5 eine Ansicht auf die an einer Förderkette angeschlossenen plattenförmigen Aufnahmebehälter, in

Fig. 6 die Anordnung des Schneidmessers mit in einer Aufnahmeöffnung des plattenförmigen Aufnahmebehälters eingesetztem Pilz, in

Fig. 7 eine Führungskette und eine Führungskurve zur Lagehalterung der plattenförmigen Aufnahmebehälter, in

Fig. 8 eine Ansicht auf einen Teil der Führungskette in Fig. 7, in

Fig. 9 eine abgeänderte Ausführungsform zur Lagestabilisierung der plattenförmigen Aufnahmebehälter, in

Fig. 10 eine weitere abgeänderte Ausführungsform zur Lagestabilisierung der plattenförmigen Aufnahmebehälter im Bereich der Schneidestation und in

Fig. 11 schematisch und schaubildlich eine Gesamtansicht auf einen mit Zuchtbeeten und Fördervorrichtung ausgerüsteten Pilzzuchtbetrieb.

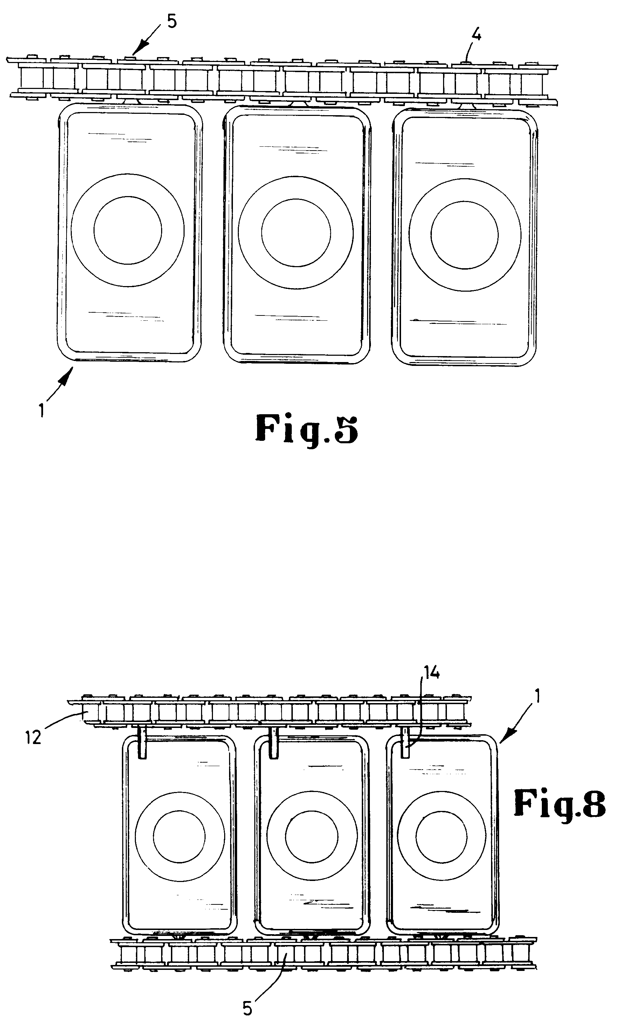

In Fig. 11 ist schaubildlich ein Gestell 21 dargestellt, das Zuchtbeete 22, 23, 24 und 25 aufnimmt, in denen Pilze P, z. B. Champignons gezüchtet werden. Vor dem Gestell 21 ist eine von einem Motor 41 angetriebene Fördervorrichtung 27 vorgesehen, die aus einem Vertikalförderteil 28 und einem Horizontalförderteil 29 besteht, wobei von einer entsprechend umlaufend geführten Förderkette 5 (Fig. 5) Aufnahmebehälter 1 getragen werden, die schwenkbar aufgehängt sind, wie dies nachfolgend anhand weiterer Ausführungsbeispiele noch erläutert wird.

Die Fördervorrichtung 27 führt zu einem Sammelband 35, auf das die in den Aufnahmebehältern 1 enthaltenen Pilze P abgegeben und abgefördert werden können.

Vor der Übergabe auf das Sammelband 35 ist eine Schneidestation 34 angeordnet, in der der Fuß der Pilze P - wie nachfolgend erläutert wird - abgeschnitten wird. Im Bereich des Sammelbandes 35 wird über zusätzliche, in der Zeichnung nicht gesondert dargestellte mechanische Mittel der Aufnahmebehälter 1 so geschwenkt, daß ein Auskippen des Pilzes möglich ist.

Der Horizontalförderteil 29 ist an Tragseilen 36 befestigt, die zu einer motorisch angetriebenen Seilrolle 37 führen. Hierdurch ist der gesamte Horizontalförderteil 29 in der Höhe vor dem Gestell 21 heb- und senkbar. Die Auslenkung der eigentlichen Förderkette 5 erfolgt über zwei Umlenkstellen 30 und 31, die an einem höhenbeweglichen Gleitschlitten 32 gelagert sind, der an einer entsprechenden Führung 38 des Vertikalförderteiles 29 auf- und abgleiten kann.

Es ist erkennbar, daß der Horizontalförderteil 29 in jeder beliebigen Höhenlage vor dem Gestell 21 und damit vor dem jeweiligen Zuchtbeet 22 bis 25 angeordnet und eingestellt werden kann, so daß ein einfaches Abgeben eines Pilzes in einen Aufnahmebehälter 1 möglich ist.

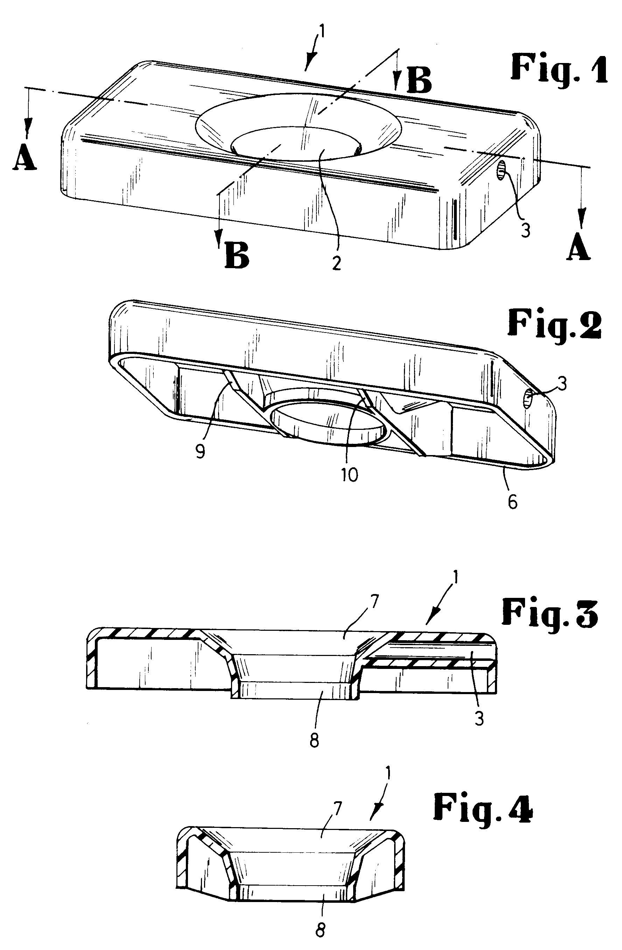

In den Fig. 1 bis 10 sind plattenförmige Aufnahmebehälter 1 dargestellt, die z. B. rechteckige Grundgestalt aufweisen und eine mittlere Aufnahmeöffnung 2 besitzen. Die Aufnahmeöffnung 2 ist dabei rund und trichterförmig ausgebildet und verjüngt sich von der Oberseite des plattenförmigen Aufnahmebehälters 1 zur Unterseite hin, so wie dies besonders deutlich die Fig. 3 und 4 sowie 6 und 10 zeigen.

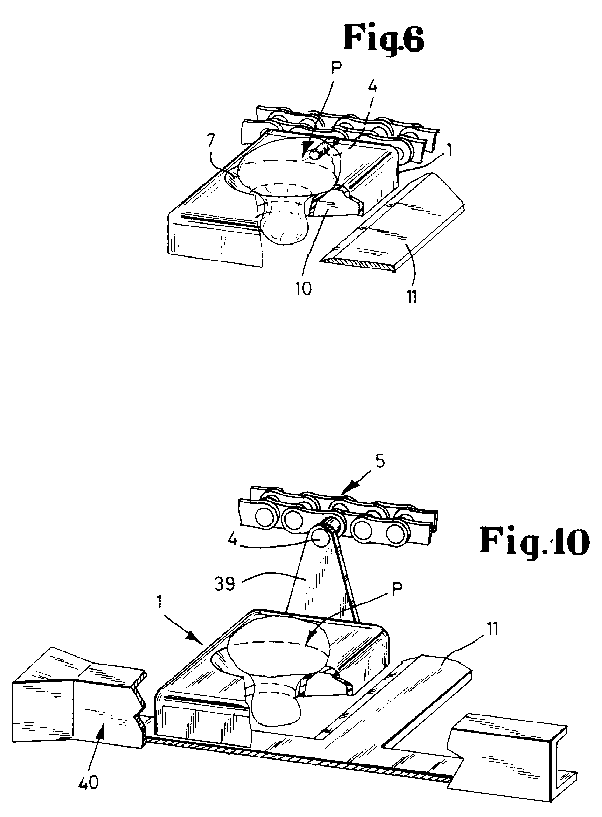

Der plattenförmige Aufnahmebehälter 1 besteht aus einem Spritzgußteil und weist eine Öffnung 3 für einen an der Förderkette 5 angeordneten Tragzapfen 4 auf. Der Durchmesser des Tragzapfens 4 ist bei einer ersten Ausführungsform gemäß den Fig. 6 bis 9 dabei so auf die Aufnahmeöffnung 3 abgestimmt, daß nur ein schwergängiges Drehen des plattenförmigen Aufnahmebehälters 1 an dem Tragzapfen 4 möglich ist, so daß diese Drehbewegung nicht von alleine eintritt, sondern über entsprechende Anschlagmittel eingeleitet und aufrechterhalten werden muß.

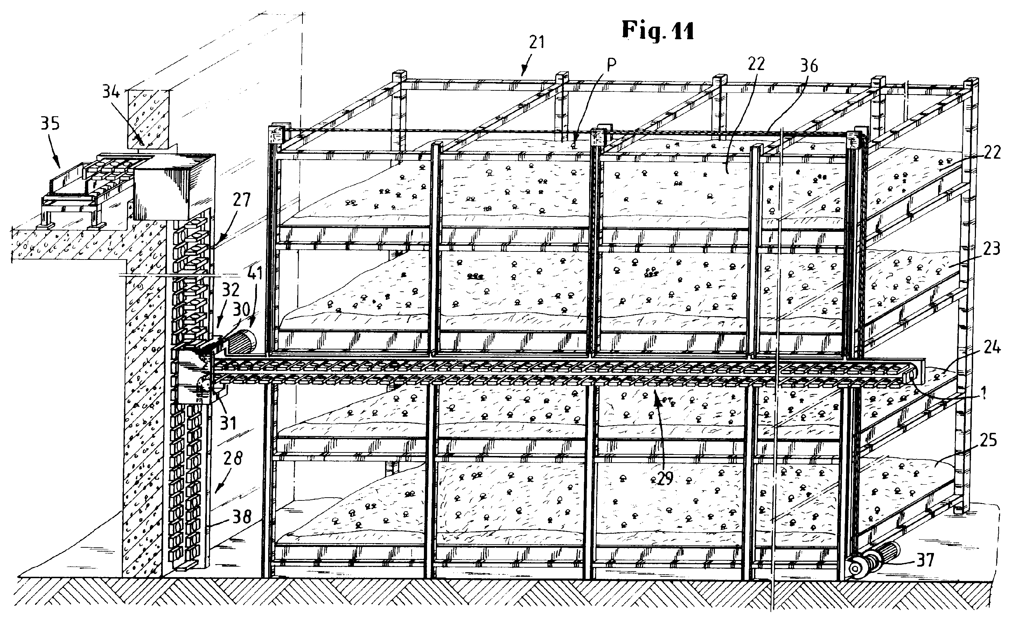

An der Unterseite des plattenförmigen Aufnahmebehälters 1 ist die eigentliche Aufnahmeöffnung 2 über die Unterkante eines Randes 6 nach unten hin etwas verlängert, so wie dies die Fig. 6 und die Fig. 3 deutlich zeigen, indem nämlich Aufgleitstege 9 und 10 geschaffen werden, die der Führung des in den Fig. 6 und 10 dargestellten Schneidmessers 11 dienen. Durch die trichterförmige Ausbildung der Aufnahmeöffnung 2 kann der in diese Aufnahmeöffnung 2 einzusetzende Pilz P mehr oder weniger weit nach unten durchtreten, so wie dies von der Größe des Pilzkopfes abhängt. Hierdurch wird immer die richtige Stelle für den Ansatz des Schneidmessers 11 beim Abschneiden des eigentlichen Pilzfußes sichergestellt.

In Fig. 3 ist der obere Randbereich der Aufnahmeöffnung 2 mit 7 und der untere Randbereich mit 8 bezeichnet.

Der von der Förderkette 5 getragene Tragzapfen 4 (Fig. 6) greift mittig an einer Schmalseite des plattenförmigen Aufnahmebehälters 1 an.

Fig. 6 soll verdeutlichen, daß, wenn der plattenförmige Aufnahmebehälter 1 in den Bereich des Schneidmessers 11 geführt wird, das Schneidmesser 11 sich an der schrägen Kante der Stege 9 und 10 führt und damit ein sicheres Abschneiden des eigentlichen Pilzfußes gewährleistet wird.

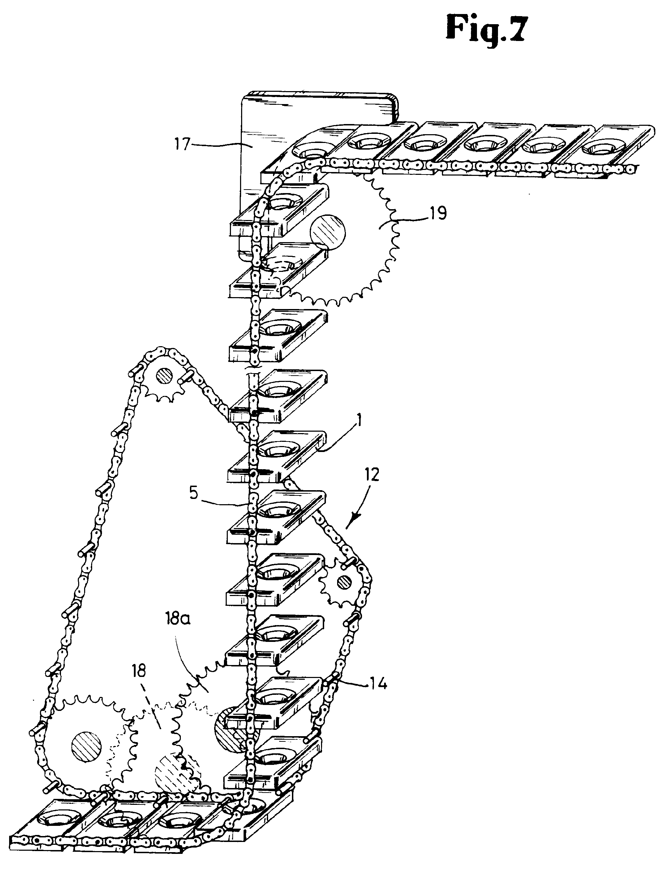

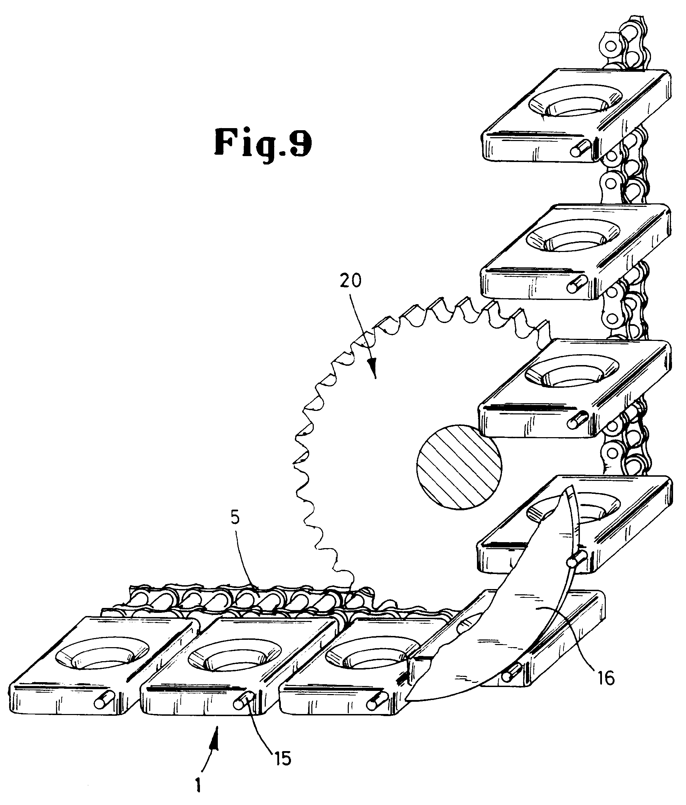

Die Fig. 7 zeigt, wie die eigentliche Förderkette 5 über das Umlenkrad 18 aus einer horizontalen in eine vertikale Lage umgelenkt wird. Hierbei würden normalerweise auch die plattenförmigen Aufnahmebehälter 1 aus der horizontalen in die vertikale Lage geschwenkt, da sie nicht frei pendelnd an der Förderkette 5 aufgehängt sind. Um trotzdem stets eine horizontale Lage der plattenförmigen Aufnahmebehälter 1 zu gewährleisten, ist im Bereich der Umlenkstellen 30 und 31 jeweils eine zusätzliche Förderkette 12 und ein zusätzliches Umlenkkettenrad 18a vorgesehen. Die zusätzliche Förderkette 12 weist Widerlagerstifte 14 auf (Fig. 8), die in den Weg der plattenförmigen Aufnahmebehälter 1 greifen und dabei eine Randkante des plattenförmigen Aufnahmebehälters 1 so beaufschlagen, daß der plattenförmige Aufnahmebehälter 1 stets in der horizontalen Lage an dem Tragzapfen 4 und damit der Kette 5 gehalten wird.

Das gleiche Problem tritt bei dem Umlenkrad 19 auf, und hier ist eine Führungskurve 17 vorgesehen, die für die stets horizontale Lage der plattenförmigen Aufnahmebehälter 1 Sorge trägt. Wie dies die Fig. 7 zeigt, legen sich die Randkanten der plattenförmigen Aufnahmebehälter 1 an das Innere der Führungskurve 17 bei Umlenkung der Förderkette 5 um das Umlenkkettenrad 19 an.

Eine weitere Möglichkeit, die plattenförmigen Aufnahmebehälter 1 im Bereich der Umlenkstellen 30, 31 horizontal auszurichten, zeigt Fig. 9. Hier ist ein Umlenkkettenrad 20 vorgesehen und mit dem Umlenkkettenrad 20 ist ein Führungsblech 16 kombiniert. An den plattenförmigen Aufnahmebehältern 1 ist ein Widerlagerstift 15 vorgeshen, der an der Außenkante des Führungsbleches 16 zur Anlage kommt und dadurch die stets horizontale Lage der plattenförmigen Aufnahmebehälter 1 garantiert.

Bei einer abgeänderten Ausführungsform, die anhand von Fig. 10 erläutert wird, sind die plattenförmigen Aufnahmebehälter 1 frei pendelbar an der Förderkette 5 dadurch angeordnet, daß der Tragzapfen 4 unter Zwischenschaltung eis Pendelbleches 39 den Aufnahmebehälter 1 trägt. Der Aufnahmebehälter 1 ist dabei starr an dem Pendelblech befestigt.

Wie dies aus dem deutschen Patent 35 25 460 bzw. dem US-Patent 48 46 337 bekannt ist, bleibt dadurch der Aufnahmebehälter 1 trotz Umlenkung der Förderkette 5 aus der horizontalen in die vertikale Lage stets horizontal ausgerichtet. Um nunmehr den Aufnahmebehälter 1 im Bereich der Schneidestation 34 festzulegen, damit das Schneidmesser 11 den Pilzfuß des Pilzes P einwandfrei abschneiden kann, ist eine Gleitführung 40 vorgesehen, in der das der Förderkette 5 abgewandte Ende des Aufnahmebehälters 1 in horizontaler Ausrichtung festgelegt wird.

**Patentansprüche**

1. Vorrichtung zum Transportieren von Pilzen in Pilzzuchtbetrieben, gekennzeichnet durch eine vor den Zuchtbeeten (22, 23, 24, 25) umlaufend ausgebildete und angetriebene, ggf. höhenverstellbare Fördervorrichtung (27) mit einer Förderkette (5), an der plattenförmige Aufnahmebehälter (1) mittig um einen horizontalen Tragzapfen (4) schwenkbar angeordnet sind, wobei jeder plattenförmige Aufnahmebehälter (1) eine Aufnahmeöffnung (2) zur Aufnahme eines Pilzes (P) aufweist und im Wege des plattenförmigen Aufnahmebehälters (1) eine Schneidstation (34) vorgesehen ist, in der in Höhe der Unterkante des Aufnahmebehälters (1) ein Schneidmesser (11) angeordnet ist, das den aus der Aufnahmeöffnung (2) nach unten über die Unterkante des plattenförmigen Aufnahmebehälters (1) vorstehenden Pilzfuß abschneidet.

2. Vorrichtung nach Anspruch 1, dadurch gekennzeichnet, daß die Aufnahmeöffnung (2) trichterförmig ausgebildet ist.

3. Vorrichtung nach Anspruch 1 oder 2, dadurch gekennzeichnet, daß der untere Rand (8) der Aufnahmeöffnung (2) über den Rand (6) des plattenförmigen Aufnahmebehälters (1) vorsteht.

4. Vorrichtung nach einem oder mehreren der vorhergehenden Ansprüche, dadurch gekennzeichnet, daß an der Unterseite des plattenförmigen Aufnahmebehälters (1) sich quer zur Längsachse erstreckende Stege (9, 10) angeordnet sind, die sich vom Rand (6) des plattenförmigen Aufnahmebehälters (1) bis zum unteren Rand (8) der Aufnahmeöffnung (2) erstrecken.

5. Vorrichtung nach einem oder mehreren der vorhergehenden Ansprüche, dadurch gekennzeichnet, daß die plattenförmigen Aufnahmebehälter (1) aus einem Kunststoffspritzteil bestehen.

6. Vorrichtung nach einem oder mehreren der vorhergehenden Ansprüche 1 bis 5, dadurch gekennzeichnet, daß der Tragzapfen (4) klemmend in einer Tragöffnung (3) des Aufnahmebehälters (1) angeordnet ist und daß im Bereich der Umlenkung der Förderkette (5) aus einer horizontalen in eine vertikale oder aus einer vertikalen in eine horizontale Richtung Anschlagmittel oder Führungsmittel vorgesehen sind, die eine stets horizontale Lage der plattenförmigen Aufnahmebehälter (1) an der Förderkette (5) bewirken.

7. Vorrichtung nach Anspruch 6, dadurch gekennzeichnet, daß als Führungsmittel eine umlaufende Kette (12) vorgesehen ist, die mit in den Weg des plattenförmigen Aufnahmebehälters (1) ragenden Widerlagerstiften (14) ausgerüstet ist und so geführt ist, daß im Bereich der Umlenkung der Förderkette (5) die plattenförmigen Aufnahmebehälter (1) waagerecht gehalten werden.

8. Vorrichtung nach Anspruch 6, dadurch gekennzeichnet, daß die plattenförmigen Aufnahmebehälter (1) einen Widerlagerstift (15) aufweisen, der außermittig an der Schmalseite des plattenförmigen Aufnahmebehälters (1) angeordnet ist und im Bereich der Umlenkung der Förderkette (5) mit einem Führungsblech (16) in Kontakt kommt, das bewirkt, daß die plattenförmigen Aufnahmebehälter (1) stets in einer horizontalen Lage gehalten werden.

9. Vorrichtung nach Anspruch 6, gekennzeichnet durch eine im Bereich der Umlenkung angeordnete Führungskurve (17), die in einem solchen Abstand zur Förderkette (5) angeordnet ist, daß die plattenförmigen Aufnahmebehälter (1) stets in der horizontalen Lage trotz Umlenkung der Förderkette (5) verbleiben.

10. Vorrichtung nach einem oder mehreren der vorhergehenden Ansprüche 1 bis 6 dadurch gekennzeichnet, daß im Bereich der Schneidstation (34) der Aufnahmebehälter (1) mit seinem der Förderkette (5) abgewandten Ende in einer U-förmigen Gleitführung (40) verschwenksicher geführt ist, wobei der an der Förderkette (5) fest angeordnete Tragzapfen (4) frei schwenkbar in der Tragöffnung (3) angeordnet ist.

**Claims**

1. Device for transporting mushrooms in mushroom cultivating concerns, characterised by a powered, where necessary vertically adjustable, conveyor device (27), which is configured to circulate in front of the culture beds (22, 23, 24, 25), having a conveyor chain (5) on which plate-shaped receiving containers (1) are centrally disposed pivotably about a horizontal supporting journal (4), each plate-shaped receiving container (1) exhibiting a receiving opening (2) for receiving a mushroom (P) and a cutting bay (34) being provided in the path of the plate-shaped receiving container (1), in which cutting bay there is disposed, level with the bottom edge of the receiving container (1), a cutting blade (11), which cuts off the base of the mushroom protruding downwards out of the receiving opening (2) beyond the bottom edge of the plate-shaped receiving container (1).

2. Device according to Claim 1, characterised in that the receiving opening (2) is configured in the shape of a funnel.

3. Device according to Claim 1 or 2, characterised in that the lower border (8) of the receiving opening (2) protrudes beyond the border (6) of the plate-shaped receiving container (1).

4. Device according to one or more of the preceding claims, characterised in that there are disposed on the underside of the plate-shaped receiving container (1) bars (9, 10), which extend transversely to the longitudinal axis from the border (6) of the plate-shaped receiving container (1) to the lower border (8) of the receiving opening (2).

5. Device according to one or more of the preceding claims, characterised in that the plate-shaped receiving containers (1) consist of a plastic injection-moulded part.

6. Device according to one or more of the preceding Claims 1 to 5, characterised in that the supporting journal (4) is disposed in a clamping manner in a supporting opening (3) in the receiving container (1) and in that, in the area of the deflection of the conveyor chain (5) from a horizontal into a vertical or from a vertical into a horizontal direction, stop means or guide means are provided, which bring about a constantly horizontal position of the plate-shaped receiving containers (1) on the conveyor chain (5).

7. Device according to Claim 6, characterised in that, as the guide means, a circulating chain (12) is provided, which is equipped with abutment pins (14) protruding into the path of the plate-shaped receiving container (1) and which is guided such that, in the area of the deflection of the conveyor chain (5), the plate-shaped receiving containers (1) are kept horizontal.

8. Device according to Claim 6, characterised in that the plate-shaped receiving containers (1) exhibit an abutment pin (15), which is disposed off-centre on the narrow side of the plate-shaped receiving container (1) and, in the area of the deflection of the conveyor chain (5), comes into contact with a guide plate (16) which has the effect of the plate-shaped receiving containers (1) being held constantly in a horizontal position.

9. Device according to Claim 6, characterised by a guide curve (17) disposed in the area of the deflection, which guide curve is disposed at a distance from the conveyor chain (5) such that the plate-shaped receiving containers (1) remain constantly in the horizontal position despite the deflection of the conveyor chain (5).

10. Device according to one or more of the preceding Claims 1 to 6, characterised in that, in the area of the cutting bay (34), the receiving container (1) is guided by its end facing away from the conveyor chain (5), in a pivot-proof manner, in a U-shaped slideway (40), the supporting journal (4) fixed to the conveyor chain (5) being disposed in a freely pivotable manner in the supporting opening (3).

**Revendications**

1. Installation pour le transport de champignons dans une champignonnière, caractérisée en ce qu'elle comporte une installation de transport (27) éventuellement réglable en hauteur, construite et entraînée de manière continue devant les couches de culture (22, 23, 24, 25), avec une chaîne de transport (5) sur laquelle des récipients collecteurs en forme de plaque (1) sont disposés avec possibilité de basculer au centre autour d'un tourillon porteur (4) horizontal, chaque récipient collecteur en forme de plaque (1) présentant une ouverture réceptrice (2) pour recevoir un champignon (P) et une station de découpe (34) étant prévue sur le trajet du récipient collecteur en forme de plaque (1), dans laquelle un couteau de découpe (11) est disposé à la hauteur du bord inférieur du récipient collecteur en forme de plaque (1) et découpe le pied du champignon qui dépasse vers le bas par l'ouverture réceptrice (2) vers le bord inférieur du récipient collecteur en forme de plaque (1).

2. Installation selon la revendication 1, caractérisée en ce que l'ouverture réceptrice (2) est conçue en forme d'entonnoir.

3. Installation selon la revendication 1 ou 2, caractérisée en ce que le bord inférieur (8) de l'ouverture réceptrice (2) dépasse du bord (6) du récipient collecteur en forme de plaque (1).

4. Installation selon l'une quelconque des revendications précédentes, caractérisée en ce que des barrettes (9, 10) perpendiculaires à l'axe longitudinal, qui s'étendent du bord (6) du récipient collecteur en forme de plaque (1) au bord inférieur (8) de l'ouverture réceptrice (2) sont disposées sur la face inférieure du récipient collecteur en forme de plaque (1).

5. Installation selon l'une quelconque des revendications précédentes, caractérisée en ce que les récipients collecteurs en forme de plaque (1) se composent d'une pièce en plastique moulée par injection.

6. Installation selon l'une quelconque des revendications précédentes, caractérisée en ce que le tourillon porteur (4) est disposé en vue d'un serrage dans une ouverture de support (3) du récipient collecteur (1) et en ce que des moyens de butée ou de guidage produisant une position toujours horizontale des récipients collecteurs en forme de plaque (1) sur la chaîne de transport (5) sont prévus dans le secteur de la déviation de la chaîne de transport (5) d'une position horizontale à une position verticale ou de la verticale à l'horizontale.

7. Installation selon la revendication 6, caractérisée en ce qu'une chaîne (12) continue est prévue comme moyen de guidage, qui est pourvue de goupilles de contre-appui (14) faisant saillie sur le trajet du récipient collecteur en forme de plaque (1) et qui est guidée de telle sorte que les récipients collecteurs en forme de plaque (1) soient tenus horizontaux dans le secteur de la déviation de la chaîne de transport (5).

8. Installation selon la revendication 6, caractérisée en ce que les récipients collecteurs en forme de plaque (1) présentent une goupille de contre-appui (15) disposée au milieu et à l'extérieur sur le côté étroit du récipient collecteur en forme de plaque (1) et qui vient en contact dans le secteur de la déviation de la chaîne de transport (5) avec une tôle de guidage (16) qui permet de toujours maintenir les récipients collecteurs en forme de plaque (1) en position horizontale.

9. Installation selon la revendication 6, caractérisée en ce qu'elle comporte une courbe de guidage (17) disposée dans le secteur de la déviation, qui est disposée à une distance de la chaîne de transport (5) telle que les récipients collecteurs en forme de plaque (1) restent toujours en position horizontale malgré la déviation de la chaîne de transport (5).

10. Installation selon l'une quelconque des revendications 1 à 6 précédentes, caractérisée en ce que dans le secteur de la station de découpe (34) le récipient collecteur en forme de plaque (1) est guidé de façon à éviter les basculements par son extrémité opposée à la chaîne de transport (5) dans un guidage à glissement (40) en forme de U, le tourillon porteur (4) fixé sur la chaîne de transport étant disposé avec possibilité de basculer librement dans l'ouverture de support (3).

Fig. 1

Fig.2

Fig.3

Fig.4

**Fig.5**

**Fig.8**

# Fig.6

# Fig.10

# Fig.7

# Fig.9

**Fig. 11**

EP 0 410 073 B1